# EUROPEAN PATENT APPLICATION

(11) **EP 4 546 256 A1**
(43) Date of publication of application: **30.04.2025**
(21) Application number: 23306879.0
(22) Date of filing: 27.10.2023
(51) Int. Cl.: G06T 7/00, G06T 7/254

(54) **SYSTEM AND METHOD FOR IMPROVING ENERGY EFFICIENCY OF DUST COLLECTORS USING IMAGE RECOGNITION OF DUST**

(71) Applicant: SCHNEIDER ELECTRIC INDUSTRIES SAS, 92500 Rueil-Malmaison (FR)
(72) Inventor: CAPITANEANU, Stefan, 91470 LIMOURS (FR); FEDDAK, Lynda, 78800 HOUILLES (FR)
(74) Representative: Plasseraud IP

(57) **Abstract**

An image capturing device captures (31) a set of successive images of an industrial environment. A dust collector removes dust from the industrial environment. The dust collector comprises a fan and a controller to control a speed of the fan. An image processing device processes (32) images in the set to determine an amount of dust in the industrial environment according to a current image of the set and generates (33) a control signal indicative of the amount of dust determined according to the current image. The control signal feeds the controller to control (34) the speed of the fan.

## Description

### Technical Field

This disclosure pertains to the field of dust collectors, and more generally of systems which are used to enhance the quality of air released from industrial and commercial processes by collecting dust, or smoke, and other impurities from air or gas.

Industrial dust collectors have long been used to evacuate dirty air from industry halls, e.g. halls containing an arc furnace, and for removing granular solid pollutants from exhaust gases prior to venting to the atmosphere. Among dust collectors, fume and smoke collectors are used to remove sub-micrometer-size particulates from the air. In the foregoing, the term "dust collector" will be used to describe any type of such industrial collectors, and the term "dust" is meant to cover any type of dust, fume, smoke and other harmful airborne contaminants which may be extracted and filtered. In this document, the terms "dust" and "smoke" can be used randomly to designate the same physical reality, i.e. air containing suspended particles of varying sizes, which must be filtered before being released into the atmosphere.

### Background Art

Dust collectors comprise a fan and motor system, which supplies mechanical energy to move contaminated air from the dust-producing source to the dust collector, where it is filtered before being exhausted to the atmosphere. Electric or diesel motors are generally used to supply the necessary energy to drive the fan. The speed of the drive usually depends on a defined pressure or flow set point in the hall in which the dust collector is set. An example of such a dust extraction device is provided in patent document US 10,898,845.

With flow setpoints that can be very high, typically of the order of 400,000 cubic meters per hour, the energy consumption of such motors is high, for example of the order of 1 MW per hour.

There is a need for improving energy efficiency of such industrial dust collectors. More generally, there is a need for industrial dust collectors that are eco-designed and have a lower impact on the environment, while keeping a high level of efficiency.

### Summary

This disclosure improves the situation.

One aspect of the present disclosure is directed to a method comprising capturing a set of successive images of an industrial environment, processing images in the set to determine an amount of dust in the industrial environment according to a current image of the set, generating a control signal indicative of the amount of dust determined according to the current image and controlling a speed of a fan of a dust collector configured for removing dust from the industrial environment with the generated control signal.

Another aspect of the present disclosure is directed to a system, comprising an image capturing device to capture a set of successive images of an industrial environment, a dust collector to remove dust from the industrial environment, wherein the dust collector comprises a fan and a controller to control a speed of the fan and an image processing device to process images in the set to determine an amount of dust in the industrial environment according to a current image of the set and to generate a control signal indicative of the amount of dust determined according to the current image, wherein the control signal feeds the controller to control the speed of the fan.

In another aspect, it is proposed a computer software comprising instructions to implement at least a part of a method as defined here when the software is executed by a processor.

Yet another aspect of the disclosure is directed to a non-transitory machine-readable storage medium encoded with instructions executable by a processor, the non-transitory machine-readable storage medium comprising instructions to control a camera for capturing a set of successive images of an industrial environment, process images in the set to determine an amount of dust in the industrial environment according to a current image of the set, generate a control signal indicative of the amount of dust determined according to the current image and control a speed of a fan of a dust collector configured for removing dust from the industrial environment with the generated control signal.

According to embodiments of the method of the present disclosure, processing images in the set may comprise identifying dust in the current image based on its motion with respect to a reference image.

Processing images in the set may further comprise transforming the images into grayscale images, in which a pixel is associated with an intensity value, comparing the grayscale current image with a grayscale reference image in the set to generate a brightness map. A pixel in the brightness map may be associated with a magnitude of a difference between the intensity value of the pixel in the grayscale current image and the intensity value of the pixel in the grayscale reference image. It may further comprise deriving a binary map from the brightness map. A pixel in the binary map may have a value of 1 if a corresponding pixel in the brightness map has a magnitude greater than a threshold, and a value of 0 if the corresponding pixel in the brightness map has a magnitude smaller than the threshold. It may further comprise calculating the amount of dust in the industrial environment according to the current image as a ratio of a number of pixels with value 1 in the binary map to the total number of pixels in the binary map.

Embodiments of the method of the present disclosure may further comprise transforming the images in the set into red, green and blue images, comparing the red, green and blue current images with red, green and blue previous images in the set to generate three corresponding brightness maps, deriving three binary maps from the three generated brightness maps and calculating the amount of dust in the industrial environment according to the current image by using information contained in all four binary maps associated with the current image.

According to embodiments of the method of the present disclosure, processing images in the set may be performed by use of an artificial intelligence software. The current image of the set may be fed into a Convolutional Neural Network, CNN, trained with captured images of the industrial environment. The CNN may apply a pre-trained model to the current image to generate a binary map associated with the current image. The amount of dust in the industrial environment according to the current image may be calculated as a ratio of a number of pixels with value 1 in the binary map to the total number of pixels in the binary map.

Embodiments of the method of the present disclosure may further comprise identifying an active zone in the images for searching dust and performing the processing operations on the identified active zone.

According to embodiments of the system of the present disclosure, the controller may dynamically calculate the speed of the fan to remove the amount of dust from the industrial environment by using the control signal as a set point. The controller may dynamically calculate the speed of the fan as a result of a polynomial function applied to the control signal. The image capturing device may be a stationary camera. The image processing device may identify dust based on its motion in the current image with respect to a reference image. The image processing device may comprise an artificial intelligence module to apply a pre-trained model to the current image to generate a binary map associated with the current image, and to calculate the amount of dust in the industrial environment according to the current image as a ratio of a number of pixels with value 1 in the binary map to the total number of pixels in the binary map.

The above features can be optionally implemented, separately or in combination one with the others. Notably, any feature described in relation with the method of the present disclosure may similarly apply to the system, the computer program or the non-transitory medium of the present disclosure, and vice-versa.

### Brief Description of Drawings

Other features, details and advantages will be shown in the following detailed description and on the figures, on which:
**Fig. 1**

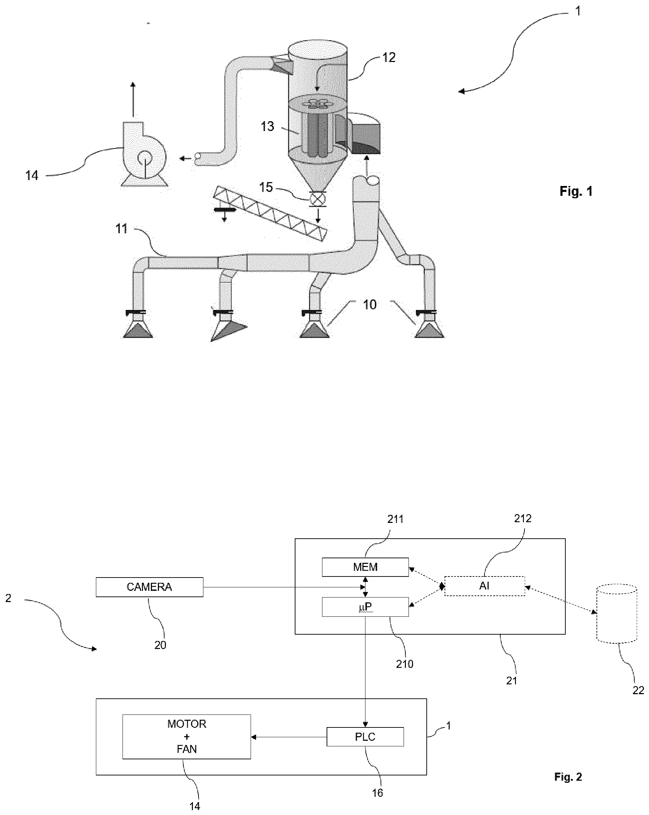

   [Fig. 1] discloses an industrial dust collector according to the prior art.
**Fig. 2**
   [Fig. 2] is a block diagram of a system for dust collection according to an embodiment of the present disclosure.
**Fig. 3**

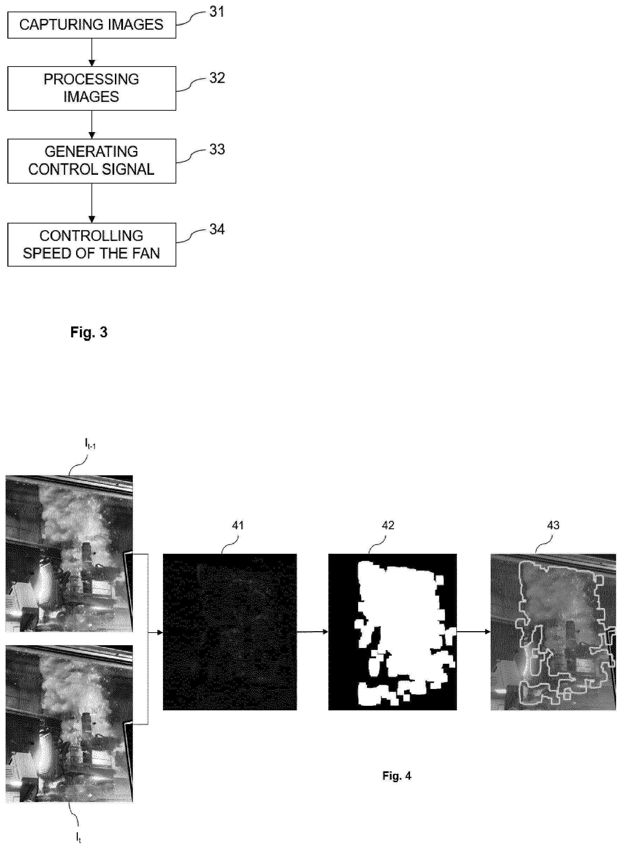

   [Fig. 3] is a flow diagram illustrating an example of a method for improving energy efficiency of dust collectors according to an embodiment of the present disclosure.
**Fig. 4**
   [Fig. 4] is a diagram showing processing of images according to an embodiment of the method of Fig. 3.
**Fig. 5**

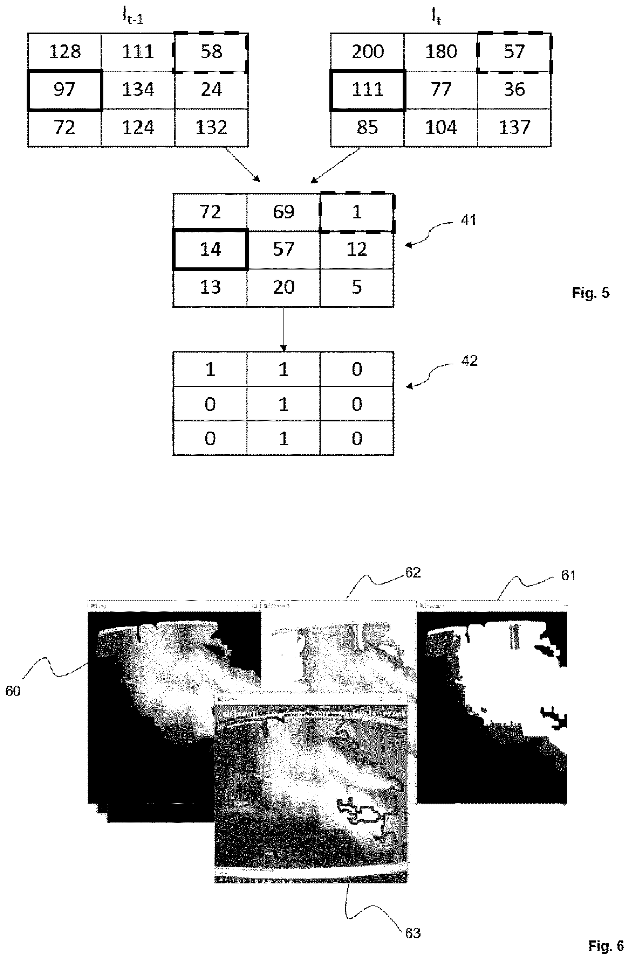

   [Fig. 5] is a diagram showing how a binary map is derived according to an embodiment of the processing of Fig. 4.
**Fig. 6**
   [Fig. 6] shows an embodiment in which a K-means algorithm is used to detect smoke color.
**Fig. 7**

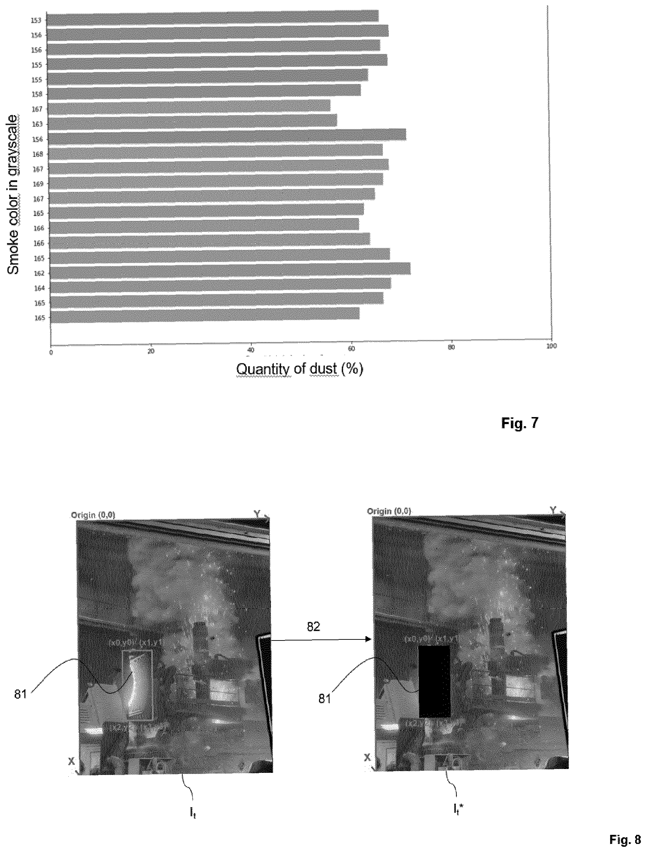

   [Fig. 7] shows histograms linking the smoke color and the amount of dust according to embodiments.
**Fig. 8**
   [Fig. 8] is a block diagram showing removal of noisy areas in the image according to an embodiment.
**Fig. 9**

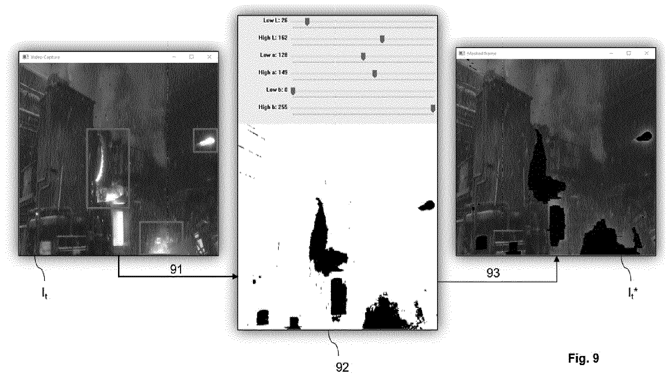

   [Fig. 9] is a block diagram showing removal of noisy areas in the image according to another embodiment.

The accompanying drawings are not intended to be drawn to scale. In the drawings, each identical or nearly identical component that is illustrated in various figures is represented by a like numeral. For purposes of clarity, not every component may be labeled in every drawing.

### Description of Embodiments

Embodiments of the present disclosure are directed generally to a method for dynamically controlling the speed of a dust collector and thus reducing the needed electrical energy, while keeping the same quality of air filtering. The method is based on smoke image identification. The quantity of exhausted dirty air is proportional to the real need, i.e. to an amount of dust or smoke detected in the industrial environment, and therefore the energy consumption is reduced.

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

It is now referred to figure 1. Figure 1 illustrates one example of a dust collector, generally indicated at 1, installed in an industrial or commercial area that may be infiltrated with smoke, dust, or other airborne particles that must be filtered before venting. This area can be a hall housing a furnace in a metallurgical industry, which emits smoke and fine airborne metal particles. It can also be a food processing plant, where cooking fumes need to be filtered. Finally, it could be any type of industrial or commercial installation likely to generate fumes or dust, such as a plastic flooring production line.

The dust collector 1 comprises extractor hoods 10, disposed in the industrial hall, to extract polluted air and to drive it through pipes 11 to a chamber 12. Extractor hoods 10 perform a so-called "secondary extraction". The dust collector 1 may also perform "primary extraction" if additional extractor hoods are directly sticked to a furnace for example. In chamber 12, the extracted air goes through a filter 13, which retains the particles and other harmful airborne contaminants. Cleaned air exhausts chamber 12 in its top part, thanks to a fan 14 that draws it in and then releases it into the outside atmosphere. Particles and other contaminants filtered by filter 13 may exit chamber 12 through an airlock 15 in communication with a dust disposal.

The fan 14 is classically driven by a motor, which supplies the energy needed to turn the fan at the required speed. According to prior art techniques, the fan speed generally follows a setpoint speed, which can be set as a function of a pressure in the industrial hall, or an air flow rate at its outlet. In other words, the speed of the drive depends usually on a defined pressure or flow set point that is not directly linked to the quantity of particles in the air to be extracted and filtered. This leads to high energy consumption, which could be advantageously reduced if the speed of the fan could be controlled as a function of the real amount of dust or smoke that needs to be extracted from the hall.

Embodiments of the present disclosure rely on an identification of the quantity of dust in the air through processing of images, in order to achieve a minimum energy extraction while keeping the same quality of the exhausted air. As will be apparent from the foregoing, image processing allows for identification of dust linked to a secondary (or tertiary) extraction. In embodiments where the dust collector also performs primary extraction, this must be taken into account as an offset for the speed set point which can be derived according to embodiments of the disclosure.

Figure 2 illustrates a block diagram of a system, generally indicated at 2, designed to achieve energy efficiency for dust collectors according to embodiments of the present disclosure.

System 2 comprises an image capturing device 20, which may be a stationary camera installed in the industrial hall to continuously or semi-continuously capture images of the industrial environment. The set of images captured by camera 20 may be timestamped, and may comprise successive frames, each depicting the industrial environment at a given moment in time. Camera 20 may film the smoke in the industrial hall.

Image capturing device 20 is connected to an image processing device generally indicated at 21, which may be a personal computer, a server computer, a smartphone, a tablet computer or any other type of computing apparatus. Image processing device 21 is to process the set of images received from camera 20 to determine an amount of dust in the industrial environment, according to a current image of the set, and to generate a control signal for controlling the speed of the fan 14.

To this purpose, image processing device 21 may include a processor 210 and/or a memory 211. The processor 210 may be in electronic communication with the memory 211. Image processing device may include additional components (not shown), and/or some of the components described herein may be removed and/or modified without departing from the scope of this disclosure.

The processor 210 may be any of a central processing unit (CPU), a semiconductor-based microprocessor, graphics processing unit (GPU), field-programmable gate array (FPGA), an application-specific integrated circuit (ASIC), and/or other hardware device suitable for retrieval and execution of instructions stored in the memory 211. The processor 210 may fetch, decode, and/or execute instructions (e.g., image processing instructions 32 and/or control signal generating instructions 33) stored in the memory 211. In some examples, the processor 210 may include an electronic circuit or circuits that include electronic components for performing a functionality or functionalities of the instructions (e.g., instructions for transforming images into grayscale images and/or instructions for comparing images and/or instructions for deriving brightness maps or binary maps, etc.). In some examples, the processor 210 may perform one, some, or all of the functions, operations, elements, methods, etc., described in connection with one, some, or all of Figures 1-5.

The memory 211 may be any electronic, magnetic, optical, or other physical storage device that contains or stores electronic information (e.g., instructions and/or data). Thus, the memory 211 may be, for example, Random Access Memory (RAM), Electrically Erasable Programmable Read-Only Memory (EEPROM), a storage device, an optical disc, and the like. In some implementations, the memory 211 may be a non-transitory tangible machine-readable storage medium, where the term "non-transitory" does not encompass transitory propagating signals. The memory 211 may store data and/or executable code (e.g., instructions).

In some examples, the image processing device 21 may also include a data store (not shown) on which the processor 210 may store information. The data store may be volatile and/or non-volatile memory, such as Dynamic Random Access Memory (DRAM), EEPROM, magnetoresistive random-access memory (MRAM), phase change RAM (PCRAM), memristor, flash memory, and the like. In some examples, the memory 211 may be included in the data store. In some examples, the memory 211 may be separate from the data store. In some approaches, the data store may store similar instructions and/or data as that stored by the memory 211. For example, the data store may be non-volatile memory and the memory 211 may be volatile memory.

In some examples, the image processing device 21 may include an input/output interface (not shown) through which the processor 210 may communicate with an external device or devices (not shown), for instance, to receive and store the set of images captured by the image capturing device 20. The input/output interface may include hardware and/or machine-readable instructions to enable the processor 210 to communicate with the external device or devices. The input/output interface may enable a wired or wireless connection to the external device or devices. In some examples, the input/output interface may further include a network interface card and/or may also include hardware and/or machine-readable instructions to enable the processor 210 to communicate with various input and/or output devices, such as a keyboard, a mouse, a display, another apparatus, electronic device, computing device, etc., through which a user may input instructions into the image processing device 21.

In some embodiments, the image processing device 21 may comprise an artificial intelligence module 212 in electric communication with a database 22. The database 22 may store a set of images of the industrial environment, which may have been captured for a past period, for the past six months for example. The database 22 may store 5,000 to 10,000 images, which may be used to train a neural network of the artificial intelligence module 212. Using a neural network is a smart solution because these networks are good at learning and understanding detailed patterns and features in images. The neural network may be trained by showing it many different examples of smoke recorded, which helps it figure out exactly what makes smoke look like smoke. The features the algorithm learns about smoke may include its color, shape, texture, how dense it is, and even how it moves. After an adequate training phase, the neural network may spot even subtle smoke patterns in an image with which it is fed. This not only makes smoke detection much more accurate, but it also means the system can handle different situations, making it a strong and efficient way to detect smoke.

In some embodiments, the artificial intelligence module 212 relies on use of a Convolutional Neural Network, CNN. A technique called segmentation is used to make the CNN identify smoke or dust in the images of the set. During a training phase, the CNN is fed with the images stored in database 22, which have been previously labeled: in these training images, the smoke areas may be marked with a special label, such as a binary mask where the pixels representing smoke are set to 1. Using the labeled images of database 22, the CNN may be trained to generate, from every image it is fed with, a binary map in which the pixels representing smoke are set to 1 while all the other pixels take a value 0. The CNN may use filters to look at the original image, discerning patterns within the pixels. This filtering process assists the CNN in locating the regions where smoke is present.

Hence, according to embodiments of the present disclosure, processor 210 determines an amount of dust in the industrial environment according to the current image captured by camera 20, either with the help of the artificial intelligence module 212, or by processing the images captured by camera 20, as will be described in greater detail in relation with figures 3 to 5.

It then generates a control signal indicative of the amount of dust it has determined and sends it to dust collector 1. At dust collector 1, the control signal feeds a controller 16, which may be a Programmable Logic Controller (PLC). The control signal may be used as a set point for the PLC. The controller 16 may calculate the speed of the fan 14 associated with the Industrial Dust Collector 1, needed in order to remove the amount of smoke and other harmful airborne contaminants from the industrial environment. While current images are successively captured by camera 20 and processed by image processing device 21, the control signal generated by image processing device 21 dynamically evolves as a function of an increase or decrease of the amount of dust and smoke in the industrial environment. Hence, the controller 16 may dynamically control the speed of the motor and fan assembly 14 to remove the dust from the industrial environment. This dynamic control enables increased energy efficiency of the Industrial dust collector 1.

In an embodiment, the control signal generated by image processing device 21 may replace the pressure fixed set point used for dust collectors in the prior art, with a variable pressure set point having a minimum and a maximum value within a given range, for example 70 to 200mBar. The variable pressure set point may be controlled with a closed control loop containing a PID (Proportional-Integral-Derivative controller) or IMC (Internal Model Controller) or a PCR (Predictive Controller) or any other type of control. Square root is used to linearize the output of the PID controller. The output of the closed control loop yields the speed variation setpoint of the drive.

Figure 3 is a flow diagram illustrating an example of a method for dynamically controlling the speed of the fan of a dust collector to improve energy efficiency. The method may be performed by the system 2 described in connection with Figure 2.

The image capturing device 20 may capture 31 images of an industrial environment. Camera 20 may be stationary, so that all images are similarly framed and can easily be compared to one another. In embodiments, capturing 31 images may be performed by a plurality of image capturing devices, each installed in a different position in the industrial environment, so as to cover a wider angle of view of the environment. Each camera of the plurality of image capturing devices may be stationary.

Capturing 31 images may be performed continuously or semi-continuously to capture successive frames which are temporally close to each other. Temporally close frames allow to closely follow the evolution of the amount of dust in the industrial environment, and hence to dynamically and precisely adjust the control signal and the speed of the fan to the evolving need of dirty air extraction. For example, image capturing device 20 may capture images at a rate which may be comprised between 120 images per second and one image every two or five seconds. Image capturing device 20 may capture a video sequence of the industrial hall.

The image processing device 21 may then process 32 the images captured by camera 20 with which it is in electronic communication.

In an embodiment previously described in relation with figure 2, processing 32 images makes use of an artificial intelligence software 212 to analyze a current frame of the set of images received from camera 20, and derive a binary map, in which the pixels of the current frame representing smoke are set to 1, while all the other pixels are set to 0. Processing 32 images hence relies on use of a trained neural network for smoke detection, such as CNN: a pre-trained model may be loaded in the artificial intelligence module 212 and fed in real-time with the current frames captured by camera 20. The model analyzes the current frame and generates the associated binary map, which allows identifying if smoke is present in the image.

In another embodiment, detailed in figure 4, processing 32 images aims at identifying dust or smoke based on its motion within the video sequence or set of successive images captured by camera 20. Several features define smoke, such as its color, its motion or its energy. The method detailed in figures 4 and 5 relies on the fact that, when there is motion in an image, the intensity value of a pixel in a current frame will differ from the intensity value of the corresponding pixel in a previous or reference frame. It allows to precisely locate the dynamic smoke in each frame of the video or in each image of the set of images captured by camera 20.

In this example, processing 32 images comprises transforming the set of images captured by camera 20 into grayscale images. In a grayscale image, each pixel of the image is associated with an intensity value comprised between 0 and 255. Processing 32 images further comprises comparing the grayscale current image, or frame, It, with the previous grayscale image, Iₜ₋₁, in the set of images captured by camera 20. Comparing current grayscale frame It with previous grayscale frame Iₜ₋₁ allows generating a brightness map 41. In the brightness map 41, each pixel is associated with a magnitude of a difference between the intensity value of the same pixel in the grayscale current frame It and in the grayscale previous frame Iₜ₋₁.

Example of such a brightness map 41 is illustrated in figure 5. For simplicity purpose, figure 5 illustrates grayscale frames comprising 3x3 pixels only. The images captured by image capturing device 20 may of course comprise a greater number of pixels, for example up to 6000x4000 pixels or more. In previous grayscale frame Iₜ₋₁, the pixel of the first row and last column has an intensity value of 58. The same pixel in current grayscale frame It has an intensity value of 57. In brightness map 41, the corresponding pixel set in the first row and last column takes a value 1, which corresponds to a magnitude of the difference between values 57 and 58. In the same way, the pixel of the second row and first column in the previous grayscale frame Iₜ₋₁ has an intensity value of 97. The same pixel in current grayscale frame It has an intensity value of 111. In brightness map 41, the corresponding pixel set in the second row and first column takes a value 14, which corresponds to a magnitude of the difference between values 97 and 111.

In this example, processor 210 may calculate the absolute difference between two grayscale images: the current frame It and the previous one Iₜ₋₁. By comparing the corresponding pixel values at each location, the absolute difference in intensity may be computed. Processor 210 may generate a brightness map 41, where each pixel represents the magnitude of the intensity difference between the current frame It and the previous one Iₜ₋₁. The brighter pixels indicate areas where a significant intensity change has occurred between the successive frames. In the context of smoke detection, these differences highlight regions where motion has occurred, potentially indicating the presence of smoke.

To further analyze and detect smoke, thresholding and morphological operations may be subsequently applied to this brightness map 41. These operations may help create a binary map 42 that isolates the regions exhibiting motion and may facilitate further processing and contour detection 43 of smoke.

In the binary map 42, the value 1 represents the smoke and the value 0 represents the background. In other words, a pixel in the binary map 42 has a value of 1 if a corresponding pixel in the brightness map 41 has a magnitude greater than a threshold, and a value of 0 if the corresponding pixel in the brightness map 41 has a magnitude smaller than the threshold. In the example of figure 5, the threshold is set to 15.

Processing 32 images may further comprise calculating a quantity, Q, of smoke in the air. In an example, the quantity Q of smoke in the air is calculated as the percentage of pixels representing smoke in the image reported to 100% of the pixels of the image. Processor 210 may calculate the amount of dust Q in the industrial environment according to the current image It as a ratio of a number of pixels with value 1 in the binary map 42 to the total number of pixels in the binary map. This binary map may either be provided by the artificial intelligence module 212 or derived from the brightness map in accordance with the embodiment of figures 4 and 5.

In an alternate embodiment, processing 32 images may make use of the current frame and of a reference frame, which may differ from the previous frame. The reference frame may be a subsequent frame, or an image of the industrial hall at a time when no smoke is present in the hall for example. Comparing the grayscale images, generating a brightness map and deriving a binary map is performed as described previously, using the values of the pixels in the reference frame instead of those of the previous frame.

The image processing device 21 then generates 33 a control signal indicative of the amount of dust determined according to the current image It. The control signal is fed to the controller 16, for example a Programmable Logic Controller of dust collector 1.

The controller 16 controls 34 the speed, S, of the fan on the basis of the control signal.

The speed S of the fan may take a value between 0 and 100% of a maximum speed of the fan depending on a value between 0 and 100% of smoke image covering Q, as calculated at step 32: S[0_100%] = Q[0_100%]. Hence, if it is determined that 20% of the current image is covered with smoke, because 20% of the pixels in the binary map have a value 1, the speed of the fan is set to 20% of its maximum speed.

The speed S of the fan may be calculated as S[0_1 00%] = a*Q+b, where Q is the amount of dust representing a percentage of smoke image covering between 0% and 100%, and where a and b are adjustment coefficients. In an embodiment, coefficients a and b may be chosen such that a = 0.6 and b = 40%. Hence, if it is determined that 20% of the current image is covered with smoke, because 20% of the pixels in the binary map have a value 1, the speed of the fan is set to 52% of its maximum speed.

The speed S of the fan may be calculated as a result of another type of polynomial function applied to the control signal representing the amount of dust Q in the hall. In an embodiment, S[0_100%] = a+(100-a)/10*sqrt(Q) where Q is the amount of dust representing a percentage of smoke image covering between 0% and 100%, and where a is an adjustment coefficient. In an embodiment, coefficient a may be chosen such that a = 40%. Hence, if it is determined that 20% of the current image is covered with smoke, because 20% of the pixels in the binary map have a value 1, the speed of the fan is set to 66.8% of its maximum speed.

Figures 4 and 5 describe embodiments in which dust or smoke is detected based on its motion only. However, as mentioned previously, other features may characterize smoke, such as its color, its temperature or its energy.

In an alternate embodiment of the present disclosure, each image captured by the camera 20 may also be transformed into a Red image, a Green image and a Blue image. Each of these Red, Green and Blue images derived from a current image of the set is respectively compared to a Red, Green and Blue image of a reference frame, which may be the previous frame.

Three additional brightness maps may be calculated for the current frame It, which are respectively associated with the red, blue and green color components. The same thresholding operations may be performed on these three additional brightness maps to derive three additional binary maps associated to the current frame It. The value of the threshold used for the brightness map derived from the grayscale image may be the same as the value of the threshold used for the brightness map derived from the red, blue and green images. The value of the threshold may be different for each of the four brightness maps, e.g. to take account of a color feature of the smoke produced in the industry hall.

For the current image It in the set, four binary maps may thus be derived, and may be combined to improve accuracy of dust detection in the image. For example, weighting coefficients may be used to weight the influence of every binary map into a final indicator that shows the existence of smoke in a given region. For example, on a scale of 100, four weighting coefficients may be used, the sum of which amounts to 100, each weighting coefficient being assigned to one of the four binary maps, such as: alpha = 10, beta = 30, gamma = 20 and delta = 40. Peculiar embodiments of the disclosure may focus on detecting certain types of smoke, which may be identified by their color patterns. For example, in an embodiment, it may be aimed to detect red smoke, which may be representative of a toxic quantity of sulfur dioxide SOz. If gamma is the coefficient assigned to the binary map derived from the red image, and the binary map of red is 0 in that region, the final coefficient will be less than 61 that may be the threshold for identifying the red smoke.

Other embodiments may rely on more complex functions for combining the four binary maps.

In other embodiments, processing 32 images comprises detecting smoke color through Machine Learning, ML. The color of the detected smoke plays a significant role in understanding its characteristics. Darker colors in the smoke imagery often correspond to denser or thicker smoke, while lighter colors typically indicate less concentrated orthinner smoke. In an embodiment described in relation to figure 6, processing 32 images may use a K-means algorithm to quantify and make sense of these color variations. The K-means algorithm is a powerful unsupervised learning technique well known in the prior art of Machine Learning.

The K-means algorithm may be applied to the smoke imagery to effectively classify colors into distinct clusters, using their similarities as criteria. This technique does not rely on prior knowledge or predefined labels, but autonomously detects patterns within the data. The parameter "K" in K-means represents the desired number of clusters the algorithm seeks to generate. In an embodiment, K may be set to 2 and a pre-segmented image 60 may be used as input to the K-means algorithm. In this pre-segmented image 60, the background may have been meticulously removed, leaving only the smoke. When this pre-segmented image 60 is fed into the algorithm with K set to 2, the K-means algorithm may perform the clustering task, resulting in two clusters. The first cluster 61 may represent the black color, associated with the background of the image, while the second cluster 62 may encapsulate the color of the smoke. This straightforward process provides a simple way of identifying the two dominant colors in the current image 63 of the set: black for the background in a first cluster 61 and the smoke's color in a second cluster 62. It may also help defining the contour of the smoke area, as illustrated on image 63. A binary map may be directly derived from the output of the K-means algorithm, where a pixel with value 0 corresponds to a pixel of the first cluster 61 and a pixel with value 1 corresponds to a pixel of the second cluster 62, representing smoke. The amount of dust may be calculated from this binary map, as previously described for other embodiments.

In addition, applying K-means to the smoke images allows to effectively segment the range of colors present in the smoke. The smoke may be classified into different color categories, which can then be correlated with the concentration or density of the smoke. In essence, K-means acts as a tool to decode the visual information within the smoke and provide valuable insights into its nature based on color variations. It helps improve the accuracy of smoke detection, and hence precisely adjust the required speed for the fan of the dust collector.

Figure 7 show histograms linking the smoke color in grayscale, as detected by the K-means algorithm and the quantity of dust Q, expressed in percentage of covering in the image. By linking the detected colors to the corresponding smoke percentages, additional insights into the nature of the detected smoke may be obtained. Displaying this information as histograms allows to visualize variations in smoke color and their correlation with the detected smoke percentages.

Referring back to figure 3, processing 32 images may further comprise identifying active zones in the images for searching dust and performing the following processing operations on the identified active zones only. Indeed, some areas in the scene may be considered undesirable because they generate noise and reduce the accuracy of the smoke detection.

For example, when the technique of the present disclosure relies on identifying dust or smoke based on its motion within the set of successive images, as in the embodiments of figures 4 and 5, noisy areas may be areas of the image in which other types of motion are present, which could be mistakenly identified as smoke during processing 32.

Such a noisy area could be, for example, an area in which an operator or a vehicle may move. When the hall comprises an arc furnace, there may be areas in the image showing fireball erupting or other types of flames or incandescent glow, which will induce motion in the successive images but should not be detected as smoke. If the industry hall comprises a machinery with moving parts, for example a conveyor belt, items moving should not be identified as smoke for efficient energy savings of the dust collector.

In some embodiments of the present disclosure, the operations described previously in relation to processing 32 of images may be performed on the current image from which noisy areas have been removed.

If the noisy areas are static, they may be identified by their position in the image, using a set of coordinates (x,y), as illustrated for example in figure 8. Figure 8 depicts a current image It of an industry hall, as captured by camera 20. The image is associated with a Cartesian coordinate system (O; X, Y). In the area 81, incandescent glow of parts of the furnace could generate noise for the smoke detection process. A rectangular box enclosing the noisy area is defined by the coordinates (x0, y0), (x1, y1), (x2, y2), (x3, y3) of its four vertices. A mask is then applied 82 to the successive images It of the set, which assigns a value of 0 to every pixel comprised in rectangular area 81. Hence, pixels of the rectangular area 81 are considered as belonging to the background of the image, and do not qualify for the presence of smoke. The active zone for searching dust may be identified as the current image to which the mask has been applied, denoted as It* in figure 8.

Another embodiment for detecting and removing the noisy areas is described in relation to figure 9 and involves performing a thresholding operation based on color intensity. This embodiment is advantageous when the region of noise can be defined within a specific range in a color space, such as L*a*b (Red, Green, Blue). As well-known in the art, the L*a*b space consists of three components: **L** represents the brightness of the color, **a** represents the color on a green-to-red axis and **b** represents the color on a blue-to-yellow axis.

The color of the noisy region may first be defined in the L*a*b color space. Depending on the type of noise (e.g. incandescent glow of electrodes in an arc furnace), a range of L*a*b values may be selected, which best represent its color. For example, this range of values is defined as (L_min, a_min, b_min) to (L_max, a_max, b_max). A thresholding operation 91 may be applied to an image It in the set of images captured by camera 20, such that any pixel in the image with (L, a, b) values such that **L_min ≤ L ≤ L_max, a_min ≤ a ≤ a_max,** and **b_min ≤ b ≤ b_max** is retained as noise. In the example of figure 9, any pixel in image It with (L, a, b) values such that 26≤ **L** ≤ 162, 128 ≤ **a** ≤ 149, and 0≤ **b** ≤ 255 is retained as noise: the corresponding pixels are shown as black on the central mask 92. Indeed, pixels in the image with L*a*b values falling within the chosen range are set to 0, and those outside the range are considered as belonging to the active zone, i.e., a potential region where smoke could be detected. The mask 92 is applied 93 to the successive images It of the set of images, which generates images It* comprising active zones which may be further processed to detect the amount of dust, as described previously in relation with the figures.

### Industrial Applicability

The technical solutions presented here can be used to improve energy efficiency of any industrial dust collector, by optimally and dynamically adapting the speed of the fan for extracting dirty air to the accurately estimated quantity of smoke in an industrial environment thanks to the use of image processing techniques.

This disclosure is not limited to the system, method and computer program described here, which are only examples. The invention encompasses every alternative that a person skilled in the art would envisage when reading this text. Notably, all the embodiments described in the present disclosure may be combined in all or in part in accordance with the scope of the appended claims.

### Citation List

### Patent Literature Documents

For any purpose, the following patent document is cited: - patcit1 : US 10,898,845 (publication number).

## Claims

1. A method, comprising :
capturing (31) a set of successive images of an industrial environment;
processing (32) images in the set to determine an amount of dust in the industrial environment according to a current image of the set;
generating (33) a control signal indicative of the amount of dust determined according to the current image;
controlling (34) a speed of a fan (14) of a dust collector (1) configured for removing dust from the industrial environment with the generated control signal.

2. The method of claim 1, wherein processing (32) images in the set comprises identifying dust in the current image based on its motion with respect to a reference image.

3. The method of claim 1 or 2, wherein processing (32) images in the set further comprises:
transforming the images into grayscale images (It, Iₜ₋₁), in which a pixel is associated with an intensity value;
comparing the grayscale current image (It) with a grayscale reference image (Iₜ₋₁) in the set to generate a brightness map (41), wherein a pixel in the brightness map (41) is associated with a magnitude of a difference between the intensity value of the pixel in the grayscale current image and the intensity value of the pixel in the grayscale reference image;
deriving a binary map (42) from the brightness map, wherein a pixel in the binary map has a value of 1 if a corresponding pixel in the brightness map has a magnitude greater than a threshold, and a value of 0 if the corresponding pixel in the brightness map has a magnitude smaller than the threshold;
calculating the amount of dust in the industrial environment according to the current image as a ratio of a number of pixels with value 1 in the binary map to the total number of pixels in the binary map.

4. The method of claim 3, further comprising:
transforming the images in the set into red, green and blue images;
comparing the red, green and blue current images with red, green and blue previous images in the set to generate three corresponding brightness maps;
deriving three binary maps from the three generated brightness maps;
calculating the amount of dust in the industrial environment according to the current image by using information contained in all four binary maps associated with the current image.

5. The method of any of claims 1 to 4, wherein processing (32) images in the set is performed by use of an artificial intelligence software (212).

6. The method of claim 5, wherein the current image of the set is fed into a Convolutional Neural Network, CNN, trained with captured images of the industrial environment,
wherein the CNN applies a pre-trained model to the current image to generate a binary map associated with the current image, and
wherein the amount of dust in the industrial environment according to the current image is calculated as a ratio of a number of pixels with value 1 in the binary map to the total number of pixels in the binary map.

7. The method of any of claims 1 to 6, further comprising identifying an active zone in the images for searching dust and performing the processing operations on the identified active zone.

8. A system (2), comprising :
an image capturing device (20) to capture a set of successive images of an industrial environment;
a dust collector (1) to remove dust from the industrial environment, wherein the dust collector comprises a fan (14) and a controller (16) to control a speed of the fan;
an image processing device (21) to:
process images in the set to determine an amount of dust in the industrial environment according to a current image of the set;
generate a control signal indicative of the amount of dust determined according to the current image, wherein the control signal feeds the controller to control the speed of the fan.

9. The system of claim 8, wherein the controller (16) dynamically calculates the speed of the fan (14) to remove the amount of dust from the industrial environment by using the control signal as a set point.

10. The system of claim 8 or 9, wherein the controller (16) dynamically calculates the speed of the fan as a result of a polynomial function applied to the control signal.

11. The system of any of claims 8 to 10, wherein the image capturing device (20) is a stationary camera.

12. The system of any of claims 8 to 11, wherein the image processing device (21) identifies dust based on its motion in the current image with respect to a reference image.

13. The system of any of claims 8 to 11, wherein the image processing device (21) comprises an artificial intelligence module (212) to apply a pre-trained model to the current image to generate a binary map associated with the current image, and to calculate the amount of dust in the industrial environment according to the current image as a ratio of a number of pixels with value 1 in the binary map to the total number of pixels in the binary map.

14. A computer software comprising instructions to implement a method according to one of claims 1 to 7 when the software is executed by a processor.

15. A non-transitory machine-readable storage medium encoded with instructions executable by a processor, the non-transitory machine-readable storage medium comprising instructions to:
control a camera for capturing a set of successive images of an industrial environment;
process images in the set to determine an amount of dust in the industrial environment according to a current image of the set;
generate a control signal indicative of the amount of dust determined according to the current image;
control a speed of a fan of a dust collector configured for removing dust from the industrial environment with the generated control signal.
